# EUROPÄISCHE PATENTANMELDUNG

(11) **EP 2 233 865 A2**
(43) Veröffentlichungstag der Anmeldung: **29.09.2010**
(21) Anmeldenummer: 10002842.2
(22) Anmeldetag: 18.03.2010
(51) Int. Cl.: F25B 30/06, F25B 49/00

(54) **Verfahren zum Betrieb einer Einrichtung zum Wärmetausch aus der Erde, sowie Wärmepumpeneinrichtung selbst**

(30) Priorität: 24.03.2009 DE 102009014121; 05.05.2009 DE 102009019733; 16.09.2009 DE 102009041752
(71) Anmelder: Bonin, Jürgen, 46509 Xanten (DE)
(72) Erfinder: Bonin, Jürgen, 46509 Xanten (DE)
(74) Vertreter: Schmidt, Karl Michael

(57) **Zusammenfassung**

Verfahren zum Betrieb einer Einrichtung zum Wärmeaustausch aus der Erde, sowie wärmepumpeneinrichtung selbst.

Um hierbei einen Schutzmechanismus zu schaffen, und darüber hinaus ein Austreten solcher Flüssigkeiten bei einer Leckage nicht nur aus Umweltschutzgründen erheblich zu minimieren, sondern auch einen Verlust der an sich teuren Sole oder Kältemittel zu vermeiden, ist erfindungsgemäß vorgeschlagen, dass der Druck im Sole- oder Kältemittel-Leitungsbereich über mindestens einen fest installierten Drucksensor während des Betriebes der Einrichtung kontinuierlich gemessen wird, und dass bei Abfall des Druckes unter einen einstellbaren Schwellwert ein Alarm ausgelöst und der Sole- oder Kältemittel Leitungsbereich automatisch mit Luft und/oder Wasser gespült wird.

## Beschreibung

Die Erfindung betrifft ein Verfahren zum Betrieb einer Einrichtung zum Wärmeaustausch aus der Erde, sowie Wärmepumpeneinrichtung selbst, gemäß Oberbegriff der Patentansprüche 1 und 14.

Mit Einrichtungen zum Wärmeaustausch aus der Erde sind auch Kühleinrichtungen , d.h. Kühlung mit "Kühle aus der Erde" ebenso gemeint wie Kältemaschinen. Im Besonderen natürlich auch die klassichen Wärmepumpen zu Nutzung der Erdwärme aus Grundwasser etc.

Diese Einrichtungen, insbesondere für Wärmepumpen sind in verschiedensten Ausgestaltungen und Wirkungsweisen bekannt. Dabei werden zumeist Leitungssysteme ins Erdreich eingebracht, sofern es um die Nutzung von Wärme oder Kälte aus dem Erdreich oder dem Grundwasser geht. Dabei wird die Wärme durch ein im Leitungssystem eingebrachtes fließfähiges Medium aus dem Erdreich bzw dem Grundwasserbereich entnommen, und über Wärmetauscher auf ein nachfolgendes, geschlossenes System übertragen, z. B. bei Wärmepumpen auf einen Wärmetauscher und dem nachfolgend angeschlossenen Carnot-Prozess durch Verdichtung das Temperaturniveau angehoben und die Nutzwärme abgeführt.

Bei Wärmepumpen unterscheidet man grob zwischen Wasser/Wasser-Wärmepumpen und Sole/Wasser-Wärmepumpen und andere. Bei Wasser/Wasser-Wärmepumpen dient als Wärmequelle das Grundwasser direkt. Je nach Grundwasserqualität kann hier zur Systemtrennung über Wärmetauscher ein Zwischenkreislauf mit einem Gemisch aus Wasser und Frostschutzmittel erforderlich sein. Das Gemisch aus Wasser und Frostschutzmittel wird technisch als Sole bezeichnet.

Der im Erdreich angelegte Kreislauf kann dabei mit einem sogenannten Förderbrunnen in Verbindung stehen, aus dem Wasser mit der Temperatur des Erdreiches entnommen wird, und über einen Wärmetauscher geführt, und danach wieder einem sogenannten Schluckbrunnen zurückgeführt wird.

Eine Sole/Wasser-Wärmepumpe arbeitet auf der Seite der Wärmequelle mit einem Wasser-Frostschutzmittel-Gemisch, welches technisch als Sole bezeichnet wird. In Verbindung mit einem Typ von Wärmepumpe, der mit einem geschlossenen Rohrleitungssystem, z.B. mit sogenannten Erdsonden oder Erdkollektoren arbeitet, wird ein Frostschutz-Wasser-Gemisch (Sole) von der oberirdischen Wärmenutzungstelle (bspw Wohnhaus) bis ins Erdreich hinein durch dort verlegte Leitungen gepumpt.

Es sind auch Wärmepumpen bekannt, bei welchen auch leicht verdampfende Kältemittel direkt durch in der Erde verlegte Rohrsysteme geleitet werden.

Egal in welchem Typus von Wärmepumpen können innerhalb eines solchen größtenteils im Erdreich verlegten Leitungssystems zuweilen Leckagen auftreten. Frostschutzmittel auch in wasserverdünnter Form oder Kältemittel stellen jedoch eine Gewässer- oder Grundwasserbelastung dar. Bisher sind keine, oder keine effektiven Schutzmaßnahmen bekannt, die ein Austreten von größeren Mengen von Sole, d.h. Wasser-Frostschutzmittelgemisch oder des Kältemittels wirksam verhindern oder dem entgegen wirken können.

Der Erfindung liegt daher die Aufgabe zugrunde, einen solchen Schutzmechanismus zu schaffen, und darüber hinaus ein Austreten solcher Flüssigkeiten bei einer Leckage nicht nur aus Umweltschutzgründen erheblich zu minimieren, sondern auch einen Verlust der an sich teuren Sole oder Kältemittel zu vermeiden, bzw zu minimieren.

Die gestellte Aufgabe ist hinsichtlich eines Verfahrens erfindungsgemäß durch die kennzeichnenden Merkmale des Anspruches 1 gelöst.

Weitere vorteilhafte Ausgestaltungen sind in den unabhängigen Ansprüchen 2 bis 13 angegeben.

Im Hinblick auf eine Wärmepumpeneinrichtung ist die Aufgabe erfindungsgemäß durch die Merkmale des Anspruches 14 gelöst.

Vorteilhafte Ausgestaltungen der Einrichtung sind in den übrigen abhängigen Ansprüchen angegeben.

Kern der verfahrensgemäßen Erfindung ist, dass der Druck im Sole- oder Kältemittel-Leitungsbereich über mindestens einen fest installierten Drucksensor während des Betriebes der Einrichtung kontinuierlich gemessen wird, und dass bei Abfall des Druckes unter einen einstellbaren Schwellwert ein Alarm ausgelöst und der Sole- oder Kältemittel Leitungsbereich automatisch mit Luft und/oder Wasser gespült wird. Wichtig ist hierbei, dass zum einen ein sichtbarer oder hörbarer Alarm ausgelöst wird, aber zum anderen, dass automatisch eine Spülung des Sole- oder Kältemittel-Kreislaufes erfolgt. Dies insbesondere in demjenigen Abschnitt, der im Erdreich verlegt ist. Wahlweise wird dabei entweder mit Wasser oder mit Druckluft gespült.

In weiterer vorteilhafter Ausgestaltung ist angegeben, dass das Spülen durch Einleitung von Trinkwasser in den Soleleitungsbereich erfolgt. So ist gewährleistet, dass eine Wasserqualität verwendet wird, die absolut Gewässerneutral ist.

In weiterer vorteilhafter Ausgestaltung ist angegeben, dass zum Spülen automatisch ein Ventil (A) den Hauswasseranschluß wasserschlüssig zum im Erdreich verlegten Sole-Leitungsbereich öffnet, in der Rücklaufleitung gleichzeitig über ein weiteres Ventil (B) als Bypass zu einem Auffangbehältnis zum Auffangen von Sole geöffnet wird. Dies ermöglicht nun, dass mittels des AUTOMATISCH zur Spülung eingeleiteten Trinkwassers als quasi Spül- oder Druckmittel, der gesamte Leitungsbreich durchspült wird, derart, dass die Sole komplett aufgefangen werden kann.

Alternativ gilt dies auch bei Wärmepumpeneinrichtungen, die mit Kältemittel statt mit Sole im unterirdischen Wärmeentnahmebereich arbeiten. Hierzu ist vorteilhaft ausgestaltet, dass bei der Verwendung von Kältemitteln im besagten im Erdreich verlegten Leitungsbereich zum Spülen automatisch ein Druckluftanschluß über ein Ventil (A) geöffnet wird, und dass in der Rücklaufleitung gleichzeitig über ein weiteres Ventil (B) ein Bypass zu einem Auffangbehältnis zum Auffangen des Kältemittels geöffnet wird. Beim Auffangen von Kältemittel statt Sole ist jedoch darauf zu achten, dass das Kältemittel in einem geschlossenen Auffangbehältnis aufgefangen wird, weil es ansonsten verdampft.

Dementsprechend ist vorteilhaft weiter ausgestaltet, dass die Menge von zur Spülung eingeleitetem Wasser durch einen Flüssigkeitszähler am Eintritt zum Auffangbehältnis gemessen und bemessen wird.

Egal ob nun mit Wasser oder mit Druckluft oder einem anderen Gas gespült wird, kann so die ausgespülte Menge erfasst werden. Bei Spülung mit Wasser kann so eine unnötige Spülmenge verhindert werden, die die aufgefangene Sole unnötig verdünnen würde.

Bei Spülung mit Luft hingegen kann so dennoch festgestellt werden, wann das gesamte Medium ausgespült ist. Bei Spülung mit Luft oder einem anderen Gas kann so dennoch festgestellt werden, wann das gesamte Medium ausgespült ist, nämlich dann, wenn keine Flüssigkeit mehr nachkommt.

Hierzu ist weiter ausgestaltet, dass bei Erreichen einer vorher festgelegten Füllmenge von Sole-Wasser-Gemisch das Ventil (A) das Sole-Leitungssystem vom Hauswasseranschluss trennt, und das Ventil (B) schließt.

Dies gemeinsam erzielt den erheblich vorteilhaften Effekt, dass trotz automatisch ablaufender Spülung, die Sole durch das zur Spülung verwendete Trinkwasser kaum verdünnt wird. Wenn das vorher ja bekannte Füllvolumen im Sole-Kreislauf im Auffangbehältnis erreicht wird, schaltet die Spülung ab, so dass die Sole nicht durch nachlaufendes Trinkwasser verdünnt wird. Sodann erfolgt eine Suche der Leckage und Beseitigung derselben. Nachfolgend kann dann die aufgefangene Sole wieder zurückgeführt werden.

Hierzu ist auch verfahrensgemäß ausgestaltet, dass nach Ortung und Beseitigung der Leckage, das im Auffangbehältnis aufgefangene Sole-Wasser-Gemisch wieder in das Soleleitungssystem zurückgepumpt wird. Gegebenenfalls muss etwas Frostschutz in die aufgefangene Sole nachgefüllt werden.

Dabei wird vorteilhafterweise so verfahren, dass zur Rückführung die aufgefangene Sole (Frostschutz-Wassergemisch) mittels einer Pumpe wieder in das Sole-Leitungssystem zurückgepumpt wird, derart, dass bei Einpumpung die darin enthaltene Spülmenge von Wasser verdrängt und wieder durch die Sole, d.h. das Frostschutzmittel-Wassergemisch ersetzt wird.

Zur grunsätzlichen Feststellung der Leckage ist vorteilhaft ausgestaltet, dass für die Druckmessung im Sole-Leitungssystem zwei Schwellwerte festgelegt werden, nämlich ein erster kleinerer Druckabfall bis dp1, bei welchem lediglich ein akustischer und/oder optischer Alarm ausgelöst wird, und ein größerer Druckabfall, bei welchem neben dem besagten Alarm sogleich automatisch die genannten Maßnahmen über eine Steuereinrichtung ausgelöst werden.

In besonders vorteilhafter Ausgestaltung ist angegeben, dass die verwendete Pumpe die vorhandene Sole-Umwälzpumpe oder Kältemittel-Umwälzpumpe ist.

Ebenso vorteilhaft ist es, dass durch Messung des Frostschutzmittelgehaltes eventuell nachzufüllendes Frostschutzmittel zugeführt/ersetzt wird, bevor diese wieder zurück in das Sole-Leitungssystem gepumpt wird. Diese nachzufüllende Menge ist jedoch so gering, in Bezug auf die aufgefangene Menge, dass hierdurch eine erhebliche Kosteneinsparung erreicht wird.

In weiterer vorteilhafter Ausgestaltung ist angegeben, dass bei drucklosem Betrieb des Sole- oder Kältmittel-kreislaufes zusätzlich oder anstatt des Druckes im Sole-oder Kältemittel-Leitungsbereich das Niveau in einem Sole-Ausgleichsgefäß über mindestens einen fest installierten Niveau- oder Füllstandssensor während des Betriebes der Einrichtung kontinuierlich gemessen wird, und dass bei Abfall des Füllstandes unter einen einstellbaren Schwellwert ein Alarm ausgelöst und der Sole- oder Kältemittel Leitungsbereich automatisch mit Luft und/oder Wasser gespült wird.

Dies ist für den drucklosen Betrieb im Sole- oder Kältemittelleitungsbreich gedacht. Auf diese Weise ist die erfindungsgemäße Leckagemeldung auch auf diesen Typ Wärmepumpe anwendbar.

In weiterer vorteilhafter Ausgestaltung ist angegeben, dass ein Sole- oder Kältemittel-Verteiler vorgesehen ist, an dem die Erdkollektoren oder Erdsonden angeschlossen werden, und welcher in einer Wanne angeordnet ist, die mit mindestens einem Niveauschalter ausgestattet austretende Sole oder Kältemittel als Füllhöhe erfasst und einen diesbezüglichen Leckagealarm, und die Maßnahmen der Spülung, oder des Abpumpens einleitet. Auf diese Ausgestaltungen setzt die Erfindung vorteilhaft in eine spezifische Ausgestaltung um.

Im Hinblick auf eine Wärmepumpeneinrichtung der gattungsgemäßen Art besteht der Kern der Erfindung darin, dass im Sole- oder Kältemittel-Leitungsbereich mindestens ein fest installierter Drucksensor angeordnet ist, über welchen im Betriebes der Einrichtung kontinuierlich der Druck messbar ist, und dass bei Abfall des Druckes unter einen einstellbaren Schwellwert durch eine Steuereinrichtung ein Alarm ausgelösbar ist und der Sole-oder Kältemittel-Leitungsbereich über eine Pumpen-, bzw Ventilanordnung automatisch mit Wasser oder Druckluft spülbar ist.

Über die Druckmessung lässt sich Leckagediagnose für einen Sole- oder Kältemittelaustritt beliebig genau umsetzen.

In weiterer vorteilhafter Ausgestaltung ist angegeben, dass mindestens ein weiterer redudanter Drucksensor zur Druckmessung in der Sole- bzw Kältmittel-Leitung vorgesehen ist. Dies schafft die notwendige Sicherheit, die auch notwendig, ist weil die Spülung ansonsten womöglich ohne automatische Nachprüfung bei einem defekten Drucksensor unnötig ausgelöst würde. Genau dies ist mit dieser Redundanz zu vermeiden.

In weiterer vorteilhafter Ausgestaltung ist angegeben, dass ein über die Steuereinrichtung steuerbares Ventil zu einem Auffangbehältnis für ausgespülte Sole oder Kältemittel vorgesehen ist, und ein steuerbares Ventil zum Hauswasseranschluss (Wasserspeiseleitung), bzw zum Druckluftanschluß eines Drucklufterzeugers vorgesehen ist.

In weiterer vorteilhafter Ausgestaltung ist angegeben, dass das Sole- oder Kältemittel-Auffangbehältnis mit einem Dichtesensor oder einem Leitfähigkeitssensor versehen ist. Auf diese Weise kann der notwendige Gehalt an Sole bzw Kältemittel nach einer Spülung einfach und kontrolliert wieder hergestellt werden.

In weiterer vorteilhafter Ausgestaltung ist angegeben, dass die Steuerung mit einer Voralarmstufe und einer Hauptalarmstufe ausgestattet ist, derart, dass lediglich ein optischer und/oder akustischer Voralarm ausgelöst wird bei Druckabfall um dp1, und dass ein optischer und/oder akustischer Hauptalarm gemeinsam mit dem besagten automatischen Spülungsvorgang ausgelöst wird bei einem Druckabfall um dp2, wobei dp2>dp1 ist. Durch diese technische Voralarm-Hauptalarm-Selektion kann der Betreiber vor einer automatischen Spülung zumindest nochmals gewarnt werden. Bleibt der Druck bspw unterhalb des ersten aber oberhalb des zweiten Schwellwertes, so wird noch keine Spülung veranlasst, wohl aber schon der Voralarm ausgelöst. Sodann kann bspw Servicepersonal eine weitere Entscheidung treffen. Sollte aber der zweite Schwellwert unterschritten werden, so wird die zwangsweise Spülung automatisch eingeleitet, zum Schutz der Umwelt. Eine Unterschreitung des ersten Schwellwertes dp1 kann auch z.B. durch Auskühlung der Sole erfolgen.

In weiterer vorteilhafter Ausgestaltung ist vorgesehen, dass im Sole- oder Kältemittel-Leitungsbereich bei drucklosem Betrieb zusätzlich oder anstatt des Drucksensors mindestens ein fest installierter Niveauschalter in einem Sole-Ausgleichsgefäß angeordnet ist, über welchen im Betriebes der Einrichtung kontinuierlich der Druck im Kreislauf, bzw das Niveau im Ausgleichsgefäß messbar ist, und dass bei Abfall des Druckes bzw des besagten Niveaus unter einen einstellbaren Schwellwert durch eine Steuereinrichtung ein Alarm ausgelösbar ist und der Sole- oder Kältemittel-Leitungsbereich über eine Pumpe, Druckeinrichtung oder Ventilanordnung automatisch mit Wasser oder Druckluft spülbar ist

In weiterer Ausgestaltung ist angegeben, dass bei den Erdsonden oder den Erdkollektoren ein Rohr-in-Rohr-System eingesetzt ist, bei welchem das Sole- oder Kältemittel führende Rohr noch durch ein weiteres Mantelrohr umgeben ist.

Eine weitere Ausgestaltung sieht vor, dass bei der Verwendung von Erdkollektoren diese im Erdreich in einer Wanne angelegt sind, derart dass austretende Sole- oder austretendes Kältemittel in derselben auffangbar ist.

Weitere Ausgestaltungen sehen vor, dass bei Auftreten bzw Erfassen einer Leckage durch Druckabfall im Sole-Kreislauf, eine Pumpe, vorzugsweise die Sole-Pumpe im Saugbetrieb betrieben wird, derart, dass die Sole im Sole-Kreislauf respektive den Erdsonden oder Erdkollektoren abgesaugt wird.

Dies hat den erheblichen Vorteil, dass bei einer größeren Leckage durch die Spülung nicht weitere Sole oder Kältemittel ins Erdreich austreten kann, sondern durch eine separate Pumpe oder durch die Solepumpe selbst die Sole in den Erdsonden oder Erdkollektoren ABGESAUGT Wird.

So wird erreicht, dass sogar im Umfeld schon ausgetretene Sole durch die Leckage wieder zurückgesaugt werden kann.

Ingesamt wird dadurch aber ein ansonsten spülungsbedingtes wenn auch geringfügiges Herausdrücken von Sole ins Erdreich beim Spülvorgang ganz vermieden.

In weiterer Ausgestaltung ist angegeben, dass nach der Absaugung mindestens einmal mit Trinkwasser gespült wird, und dass die abgesaugte Sole in einem Auffangbehältnis aufgefangen, und nach Beseitigung der Leckage wiederverwendet wird. Dabei kann wegen der spülungsbedingten Verdünnung eine benötigte Menge Glykol, oder welches Kälte- oder Frostschutzmittel auch immer, wieder zugeführt werden.

Besonders vorteilhaft ist, dass die besagten Maßnahmen des Absaugvorganges automatisch generiert werden. Dadurch ist ein Höchstmaß an Sicherheit gegeben.

Die Erfindung ist in einem Ausgestaltungsbeispiel in der Zeichnung dargestellt und nachfolgend näher beschrieben.

Es zeigt
- Figur 1:: Ausführungsbeispiel für Wärmepumpe mit Erdsonden/Erdkollektoren
- Figur 2:: Ausführungsbeispiel für Wärmepumpe mit Brunnensonden
- Figur 3:: Ausführungsbeispiel für Wärmepumpe mit Erdsonden/Erdkollektoren
- Figur 4:: Ausführungsbeispiel für Wärmepumpe mit Brunnensonden
- Figur 5:: Ausschnitt Solekreislauf

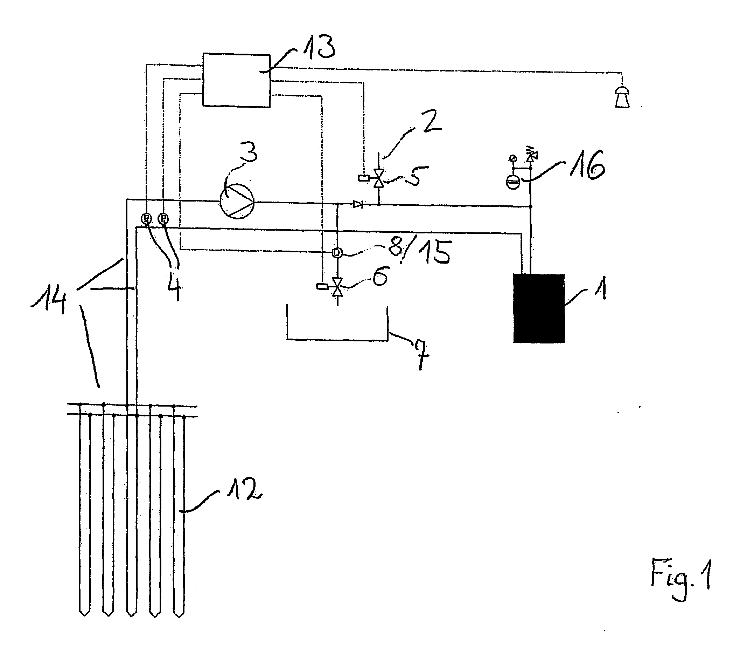

Figur 1 zeigt ein erstes Ausführungsbeispiel mit der Anwendung bei einer sogenannten Wärmepumpe 1 mit Erdsonden/Erdkollektoren 12. Oberirdisch ist die Wärmepumpe 1 installiert, und mit einem unterirdisch velegten Sole-Leitungssystem 14 verbunden, welches mit dem Wärmeleitmittel Sole (z.B. 30 % Glykol,70% Wasser) gefüllt ist. Das Sole-Leitungssystem verläuft dabei ins Erdreich hinein, und durchläuft dort die sogenannten Erdsonden, Erdkollektoren oder andere Arten von Soleleitungssystemen, z.B. Gräben, Rigolen, etc. , die ein System von Leitungen beschreiben um eine möglichst gute Wärmeaufnahme aus dem Erdreich, und dem dortig vorhandenen Grundwasser zu bewerkstelligen. Das Sole-Leitungssystem 12 ist somit unterirdisch, also im Erdreich verlegt.

Insgesamt ergibt sich ein geschlossener Kreislauf, so dass die Sole über eine Umwälzpumpe 3 durch das Soleleitungssystem 12, und zurück wieder zur Wärmepumpe 1 gepumpt wird, dort die Wärme wieder an einen Wärmetauscher abgibt und wieder weitergepumpt wird, wieder in das besagte Sole-Leitungssystem 12 usw. Dabei wird ein kontinuierlicher Kreislauf aufrecht erhalten. Weiterhin ist hier vorzugsweise im oberidischen Bereich Der Sole-Kreislauf, d.h. das Sole-Leitungssystem 14 mit einem Trinkwasseranschluß/Hauswasseranschluß 2 versehen, der über ein erstes Steuerventil auf das Soleleitungssystem aufschaltbar ist. Über ein zweites Steuerventil 6 ist das Sole-Leitungssystem 14 auf einen Leitungsabschnitt schaltbar, der in der Auffangwanne 7 für Sole endet. Das Sole-Leitungssystem 14 ist außerdem mit mindestens einem Druckwächter 4 verbunden. Besser ist jedoch die redundante Anordnung von 2 Druckwächtern.

Entsteht nun eine Leckage innerhalb des Soleleitungssystems 14, so sinkt der Druck, weil das Sole-Leitunssystem ein geschlossenes Kreislaufsystem ist.

Der Druckabfall dp1 am Druckwächter 4 bei einem betriebsbedingten, geringen Druckabfall wird dabei signaltechnisch der Steuerung 13 gemeldet. Bleibt es bei einem nur kleinen Druckabfall, dann wird lediglich ein optischer und/oder akustischer Alarm ausgelöst.

So hat der Betreiber die Möglichkeit etwas Sole nachzufüllen, um dauerhaft einen störungsfreien Betrieb zu ermöglichen. Das Nachfüllen sollte jedoch nur über einen zu verplombenden Anschluss von einem autorisierten Fachmann erfolgen, der anschließend den Anschluss wieder verplombt. So wird einem nicht vorgesehenen regelmäßen Nachfüllen bei einer nur kleinen Leckage ohne Leckagebeseitigung entgegen gewirkt.

Jeder stetig fallende Druckabfall bedeutet letztendlich eine Leckage, und somit den Austritt von Sole. Dies ist insbesondere in demjenigen Soleleitungsbereich bedenklich, der unterirdisch verläuft. Ein Austritt von Glykol-Wassergemisch ins Erdreich möglichst effektiv zu minimieren ist Ziel der vorliegnden Erfindung.

Nimmt der Druck jedoch weiter ab und unterschreitet einem Wert einen Wert von p2, so wird über die signaltechnische Verbindung zur Steuerung bereits ein Notablauf automatisch generiert, der einen Spülvorgang des Sole-Leitungssystems mit Wasser, vorzugsweise mit Trinkwasser einleitet. So wird das Leitungssystem schnellstmöglicht durchspült, so dass die ins Erdreich austretende Sole-Menge minimiert wird.

Dabei ist im Leitungsbereich der Einleitung zur Auffangwanne ein Wasserzähler vorgesehen. Dieser zählt beim automatischen Spülvorgang die Spülwassermenge und limitiert sie auf eine einstellbare Maximalmenge von größer als das einfache Füllvolumen des Sole-Leitungssystems 14 bis hin zu einer maximal, z.B. dem 1,5 fachen dieser Menge. Bei Erreichen dieser Maximalmenge schaltet dann das Ventil am Hauswasseranschluß automatisch ab.

Der ausgelöste Alarm signalisiert sodann den Anlass zur Suche der Leckage. Das Sole-Leitungssystem 14 ist nach dem Spülvorgang mit Wasser gefüllt und hat die Sole in die Auffangwanne 7 gedrückt, so dass keine Sole mehr ins Erdreich versickern kann. Nun kann beispielsweise durch Erhöhung des Druckes in diesem System in Verbindung mit z.B. bekannten Ultraschallverfahren nach der Leckage gesucht werden. Ist diese gefunden, so wird diese beseitigt, und die aufgefangene Sole, ggfs unter Nachfüllung einer kleiner Menge von bspw Glykol, wieder dem Sole-Leitungssystem zurückgeführt werden. Dabei wird die Sole einfach über das Einspeisen und Einpumpen mittels einer Pumpe, im Besonderen der Umwälzpumpe 3 wieder in das Sole-Leitungssystem zurückgepumpt und verdrängt dabei wieder das dort enthaltene Wasser, was über ebenfalls eine Öffnung des Ventiles zur Auffangwanne das Wasser in die Auffangswanne 7 fließen lässt, bis das gesamte System wieder mit Sole gefüllt ist. Um zuvor die Konzentration von Sole ausbalancieren und einstellen zu können, sind entsprechende Dichtesensoren oder Frostschutzmessmittel in/an der Auffangwanne 7 angeordnet. Diese sind signaltechnisch ebenfalls mit der Steuerung verbunden, so dass über den entsprechenden Sensor auch eine automatische Einstellung des Glykol/Wassergemisches (Sole) möglich ist, indem nach Einbringung einer Menge Glykol, durch Ansteuerung des besagten Ventiles am Hauswasseranschluß automatisch eine dementsprechende Menge an Wasser zugeführt werden kann, bis das Konzentrationsverhältnis wieder eingestellt ist. Die entsprechende Software ist in der Steuerung abgelegt.

Insgesamt können in der Steuerung auch schon sogenannte voreingestellte Servicewerte, wie Spülmengen, Säuregehalt bei welchem Betriebsmodus der Wärmepumpe, häufig auftretende Leckagen, Ansteuerparameter für die Ventile etc als Hinweiswerte abgelegt werden. Dabei kann das System adaptiv, als selbstlernend und selbstoptimierend arbeiten, und aus jedem Störfall neue noch optimalere Paramter zur Steuerung ermitteln. Darüber hinaus ist es auch möglich dass Steuerung eine Internetschnittstelle zur Ferndiagnose aufweist. In diesem Fall ist in der Steuerung noch ein Browser integriert. Über diesen können dann auch auch von extern Diagnosen durchgeführt und/oder optimale Steuerparamter bereitgestellt werden.

Dasselbe gilt nun auch für die Verwendung von Kältemittel statt Sole im Erdsondenbereich.

Die Spülung kann aber auch mit Druckluft erfolgen. Die Spülung mit Druckluft ist aber nicht beschränkt auf den Kältemittel-Typ von Wärmepumpen, sondern kann als Spülmittel auch für den Sole-Typ verwendet werden. Druckluft hat, wenn verfügbar noch den Vorteil, dass beim Spülvorgang die Sole nicht verdünnt wird, und 1:1 ohne Aufmischung mit Glykol wieder verwendet werden.

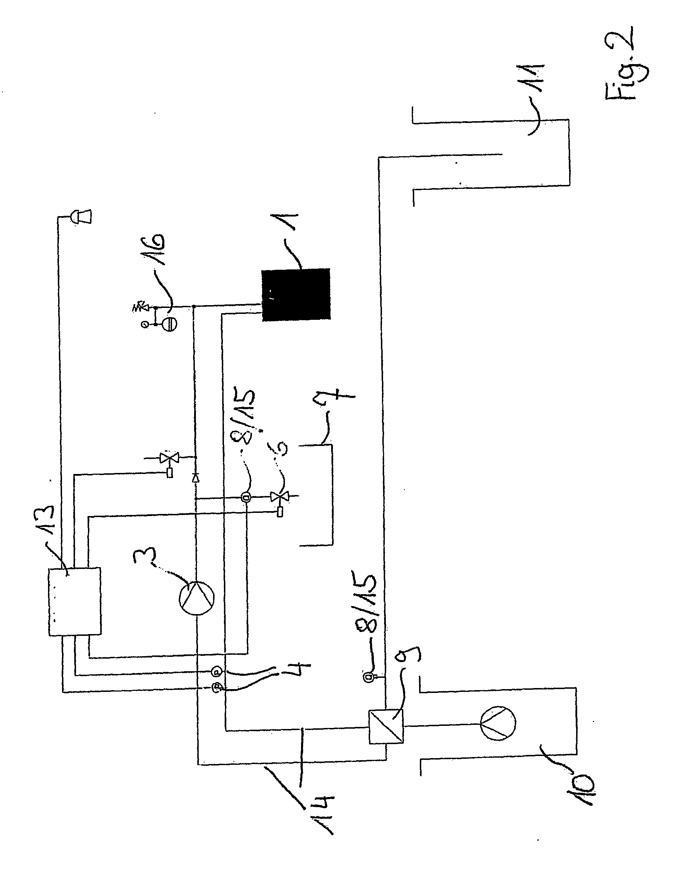

Figur 2 zeigt ein Ausführungsbeispiel für eine Anwendung bei einer Sole-Wasser-Wärmepumpe mit Brunnensonden. Gegenüber den Erdsonden am Beispiel aus Figur 1 werden im Beispiel nach Figur 2 diese nicht direkt im Erdreich vergraben, sondern es wird Wasser aus einem Förderbrunnen entnommen und zu einem Wärmetauscher gepumpt und sodann wieder in einen Schluckbrunnen zurück ins Erdreich geleitet. Hinter dem Wärmetauscher ist aber dann wieder eine Sole-Kreislauf, oder ein Kältemittelkreislauf.

Die Leckageüberwachung dieses Sole- oder Kältemittelbereiches erfolgt dann wieder über die Drucküberwachung.

Anstatt der Brunnensonden kann aber auch ein üblicher Wärmetauscher verwendet werden.

Hinweis: Für den Fall, dass Kältemittel im Leitungssystem verwendet wird, ist zu beachten, dass dabei schon die Erdsonden selbst als Verdampfer wirken. Es ist also bei der Drucküberwachung darauf zu achten dass man unter Umständen keinen statischen Druck überwacht, sondern ein Druckprofil über die Zeit. In diesem Fall würde womöglich erst ein Abweichen von gemittelten Drücken eine Alramsignal auslösen sollen.

Dabei findet der Vergleich von Soll-Druckverlauf und Ist-Druckverlauf zur Diagnose einer Abweichung ebenso in Richtung Druckverlust, der dann die Leckage signalisiert.

Die erfindungsgemäße Überwachung findet dabei nicht nur für die genannten Ausführungsbeispiele Anwendung. Vielmehr gilt dies für alle Sole- und Kältemittel führenden Anlagen, sofern Abschnitte der Sole- oder Kältemittelleitungen im Erdreich oder oberhalb desselben angeordnet sind. Wichtig ist hierbei nur, dass die Leitungssysteme in der besagten Weise überwacht werden, so dass ein unbemerktes Austreten ins Erdreich oder die Umwelt bei einer Leckage vermieden oder minimiert wird.

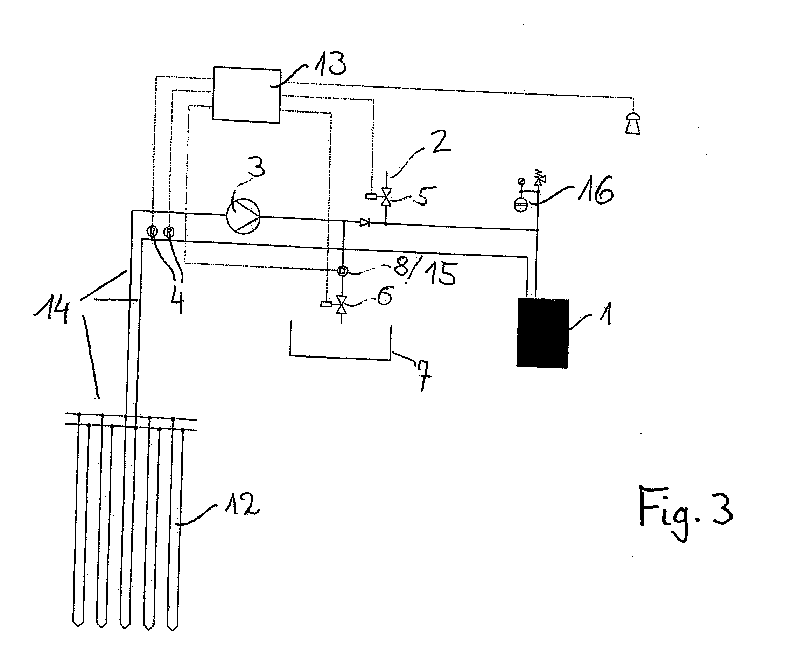

Figur 3 zeigt ein Ausführungsbeispiel mit der Anwendung bei einer sogenannten Wärmepumpe 1 mit Erdsonden/Erdkollektoren 12. Oberirdisch ist die Wärmepumpe 1 installiert, und mit einem unterirdisch velegten Sole-Leitungssystem 14 verbunden, welches mit dem Wärmeleitmittel Sole (z.B. 30 % Glykol,70% Wasser) gefüllt ist. Das Sole-Leitungssystem verläuft dabei ins Erdreich hinein, und durchläuft dort die sogenannten Erdsonden, Erdkollektoren oder andere Arten von Soleleitungssystemen, z.B. Gräben, Rigolen, etc. , die ein System von Leitungen beschreiben um eine möglichst gute Wärmeaufnahme aus dem Erdreich, und dem dortig vorhandenen Grundwasser zu bewerkstelligen. Das Sole-Leitungssystem 12 ist somit unterirdisch, also im Erdreich verlegt.

Insgesamt ergibt sich ein geschlossener Kreislauf, so dass die Sole über eine Umwälzpumpe 3 durch das Soleleitungssystem 12, und zurück wieder zur Wärmepumpe 1 gepumpt wird, dort die Wärme wieder an einen Wärmetauscher abgibt und wieder weitergepumpt wird, wieder in das besagte Sole-Leitungssystem 12 usw. Dabei wird ein kontinuierlicher Kreislauf aufrecht erhalten. Weiterhin ist hier vorzugsweise im oberidischen Bereich Der Sole-Kreislauf, d.h. das Sole-Leitungssystem 14 mit einem Trinkwasseranschluß/Hauswasseranschluß 2 versehen, der über ein erstes Steuerventil auf das Soleleitungssystem aufschaltbar ist. Über ein zweites Steuerventil 6 ist das Sole-Leitungssystem 14 auf einen Leitungsabschnitt schaltbar, der in der Auffangwanne 7 für Sole endet. Das Sole-Leitungssystem 14 ist außerdem mit mindestens einem Druckwächter 4 verbunden. Besser ist jedoch die redundante Anordnung von 2 Druckwächtern.

Entsteht nun eine Leckage innerhalb des Soleleitungssystems 14, so sinkt der Druck, weil das Sole-Leitunssystem ein geschlossenes Kreislaufsystem ist.

Der Druckabfall dp1 am Druckwächter 4 bei einem betriebsbedingten, geringen Druckabfall wird dabei signaltechnisch der Steuerung 13 gemeldet. Bleibt es bei einem nur kleinen Druckabfall, dann wird lediglich ein optischer und/oder akustischer Alarm ausgelöst.

Alternativ oder zusätzlich zur Druckmessung können bei drucklosem Betrieb des Sole- oder Kältemittelleitungssystems Niveaumessungen in Ausgleichsbehältern oder Ausgleichsgefäßen 16 vorgenommen werden. Bei Leckagen innerhalb des besagten Leitungssystems entsteht dort auch ein merklicher und damit sensorisch erfassbarer Schwund (Füllstandabfall). Dieser erfasst dabei ebenso eine Leckage. Wichtig ist nur, dass Erfahrungswerte für den Füllstand den normalen Schwund an Sole oder Kältemittel von einem Leckagebedingten Abfall des Füllstandes unterscheiden kann. Von daher ist auch hier die Methode der gestuften Alarmauslösung mit Voralarm und Hauptalarm vorteilhaft.

So hat der Betreiber die Möglichkeit etwas Sole nachzufüllen, um dauerhaft einen störungsfreien Betrieb zu ermöglichen. Das Nachfüllen sollte jedoch nur über einen zu verplombenden Anschluss von einem autorisierten Fachmann erfolgen, der anschließend den Anschluss wieder verplombt. So wird einem nicht vorgesehenen regelmäßen Nachfüllen bei einer nur kleinen Leckage ohne Leckagebeseitigung entgegen gewirkt.

Jeder stetig fallende Druckabfall bedeutet letztendlich eine Leckage, und somit den Austritt von Sole. Dies ist insbesondere in demjenigen Soleleitungsbereich bedenklich, der unterirdisch verläuft. Ein Austritt von Glykol-Wassergemisch ins Erdreich möglichst effektiv zu minimieren ist Ziel der vorliegnden Erfindung.

Nimmt der Druck jedoch weiter ab und unterschreitet einem Wert einen Wert von p2, so wird über die signaltechnische Verbindung zur Steuerung bereits ein Notablauf automatisch generiert, der einen Spülvorgang des Sole-Leitungssystems mit Wasser, vorzugsweise mit Trinkwasser einleitet. So wird das Leitungssystem schnellstmöglicht durchspült, so dass die ins Erdreich austretende Sole-Menge minimiert wird.

Dabei ist im Leitungsbereich der Einleitung zur Auffangwanne ein Wasserzähler vorgesehen. Dieser zählt beim automatischen Spülvorgang die Spülwassermenge und limitiert sie auf eine einstellbare Maximalmenge von größer als das einfache Füllvolumen des Sole-Leitungssystems 14 bis hin zu einer maximal, z.B. dem 1,5 fachen dieser Menge. Bei Erreichen dieser Maximalmenge schaltet dann das Ventil am Hauswasseranschluß automatisch ab.

Der ausgelöste Alarm signalisiert sodann den Anlass zur Suche der Leckage. Das Sole-Leitungssystem 14 ist nach dem Spülvorgang mit Wasser gefüllt und hat die Sole in die Auffangwanne 7 gedrückt, so dass keine Sole mehr ins Erdreich versickern kann. Nun kann beispielsweise durch Erhöhung des Druckes in diesem System in Verbindung mit z.B. bekannten Ultraschallverfahren nach der Leckage gesucht werden. Ist diese gefunden, so wird diese beseitigt, und die aufgefangene Sole, ggfs unter Nachfüllung einer kleiner Menge von bspw Glykol, wieder dem Sole-Leitungssystem zurückgeführt werden. Dabei wird die Sole einfach über das Einspeisen und Einpumpen mittels einer Pumpe, im Besonderen der Umwälzpumpe 3 wieder in das Sole-Leitungssystem zurückgepumpt und verdrängt dabei wieder das dort enthaltene Wasser, was über ebenfalls eine Öffnung des Ventiles zur Auffangwanne das Wasser in die Auffangswanne 7 fließen lässt, bis das gesamte System wieder mit Sole gefüllt ist. Um zuvor die Konzentration von Sole ausbalancieren und einstellen zu können, sind entsprechende Dichtesensoren oder Frostschutzmessmittel in/an der Auffangwanne 7 angeordnet. Diese sind signaltechnisch ebenfalls mit der Steuerung verbunden, so dass über den entsprechenden Sensor auch eine automatische Einstellung des Glykol/Wassergemisches (Sole) möglich ist, indem nach Einbringung einer Menge Glykol, durch Ansteuerung des besagten Ventiles am Hauswasseranschluß automatisch eine dementsprechende Menge an Wasser zugeführt werden kann, bis das Konzentrationsverhältnis wieder eingestellt ist. Die entsprechende Software ist in der Steuerung abgelegt.

Insgesamt können in der Steuerung auch schon sogenannte voreingestellte Servicewerte, wie Spülmengen, Säuregehalt bei welchem Betriebsmodus der Wärmepumpe, häufig auftretende Leckagen, Ansteuerparameter für die Ventile etc als Hinweiswerte abgelegt werden. Dabei kann das System adaptiv, als selbstlernend und selbstoptimierend arbeiten, und aus jedem Störfall neue noch optimalere Paramter zur Steuerung ermitteln. Darüber hinaus ist es auch möglich dass Steuerung eine Internetschnittstelle zur Ferndiagnose aufweist. In diesem Fall ist in der Steuerung noch ein Browser integriert. Über diesen können dann auch auch von extern Diagnosen durchgeführt und/oder optimale Steuerparamter bereitgestellt werden.

Dasselbe gilt nun auch für die Verwendung von Kältemittel statt Sole im Erdsondenbereich.

Die Spülung kann aber auch mit Druckluft erfolgen. Die Spülung mit Druckluft ist aber nicht beschränkt auf den Kältemittel-Typ von Wärmepumpen, sondern kann als Spülmittel auch für den Sole-Typ verwendet werden. Druckluft hat, wenn verfügbar noch den Vorteil, dass beim Spülvorgang die Sole nicht verdünnt wird, und 1:1 ohne Aufmischung mit Glykol wieder verwendet werden.

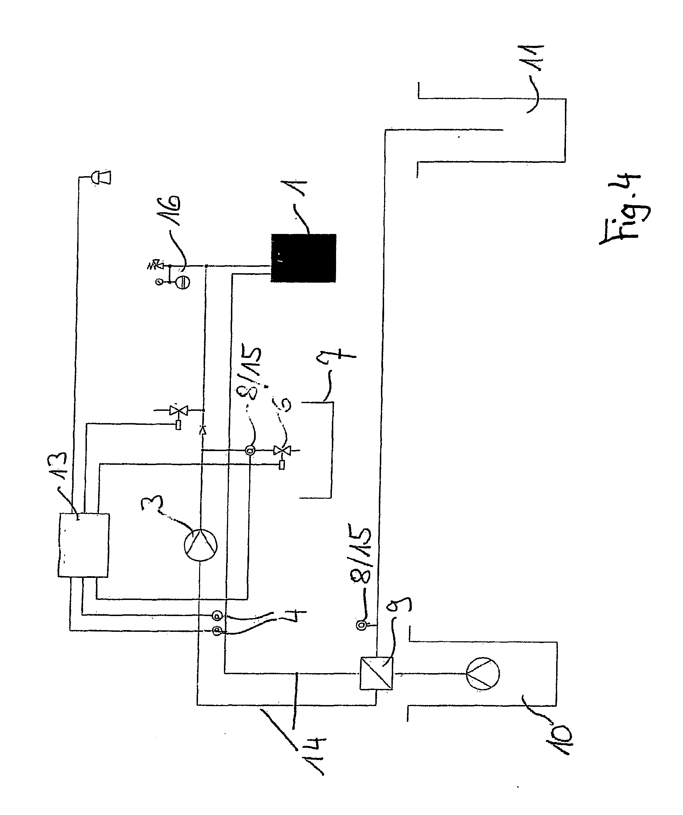

Figur 4 zeigt ein Ausführungsbeispiel für eine Anwendung bei einer Sole-Wasser-Wärmepumpe mit Brunnensonden. Gegenüber den Erdsonden am Beispiel aus Figur 1 werden im Beispiel nach Figur 2 diese nicht direkt im Erdreich vergraben, sondern es wird Wasser aus einem Förderbrunnen entnommen und zu einem Wärmetauscher gepumpt und sodann wieder in einen Schluckbrunnen zurück ins Erdreich geleitet. Hinter dem Wärmetauscher ist aber dann wieder eine Sole-Kreislauf, oder ein Kältemittelkreislauf.

Die Leckageüberwachung dieses Sole- oder Kältemittelbereiches erfolgt dann wieder über die Drucküberwachung.

Anstatt der Brunnensonden kann aber auch ein üblicher Wärmetauscher verwendet werden.

Hinweis: Für den Fall, dass Kältemittel im Leitungssystem verwendet wird, ist zu beachten, dass dabei schon die Erdsonden selbst als Verdampfer wirken. Es ist also bei der Drucküberwachung darauf zu achten dass man unter Umständen keinen statischen Druck überwacht, sondern ein Druckprofil über die Zeit. In diesem Fall würde womöglich erst ein Abweichen von gemittelten Drücken eine Alramsignal auslösen sollen.

Dabei findet der Vergleich von Soll-Druckverlauf und Ist-Druckverlauf zur Diagnose einer Abweichung ebenso in Richtung Druckverlust, der dann die Leckage signalisiert.

Die erfindungsgemäße Überwachung findet dabei nicht nur für die genannten Ausführungsbeispiele Anwendung. Vielmehr gilt dies für alle Sole- und Kältemittel führenden Anlagen, sofern Abschnitte der Sole- oder Kältemittelleitungen im Erdreich oder oberhalb desselben angeordnet sind. Wichtig ist hierbei nur, dass die Leitungssysteme in der besagten Weise überwacht werden, so dass ein unbemerktes Austreten ins Erdreich oder die Umwelt bei einer Leckage vermieden oder minimiert wird.

Auch hierbei gilt die Alternative, bei drucklosem Betrieb mit besagter Niveaumessung des Sole- oder Kältemittelfüllstandes zu operieren.

Weitere spezielle Ausgestaltungen betreffen ein Rohr-Rohr-System des Sole- oder Kältemitteleitungssystems 14. Dabei wird die Sole oder das Kältemittel in einem inneren Rohr geführt welches noch von einem Mantelrohr umgeben ist. Dabei ist darauf zu achten, dass ein dennoch guter Wärmeübergang von der Umgebung zur Sole oder zum Kältemittel gegeben ist.

Ferner ist es auch möglich im Erdreich für die Erdsonden 12 oder die Erdkollektoren eine diese umgebende Wanne zu bauen. Die übrige Leckagekontrolle kann dabei wie gehabt ablaufen. Es wird lediglich ZUSÄTZLICH noch eine absolute Sperre für leckagebedingt austretende Sole oder Kältemittel gegeben, damit dies nicht ins Grundwasser gelangen kann.

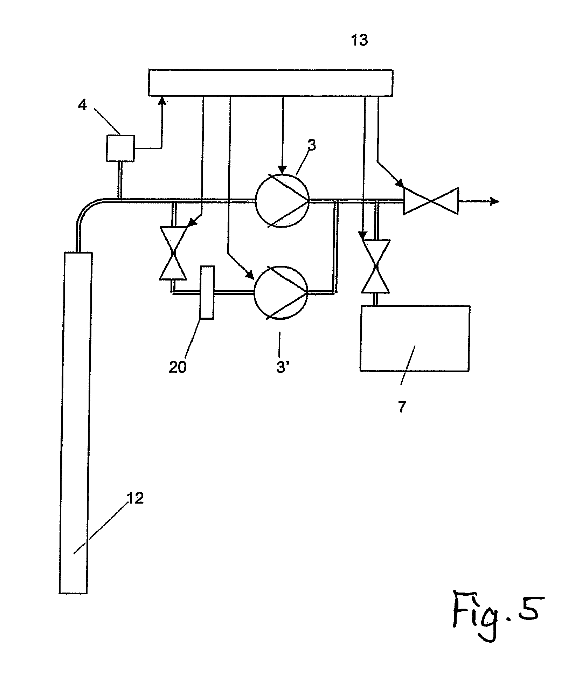

Figur 5 zeigt einen Ausschnitt aus dem Solekreislauf einer Wärmepumpe, und spezifiziert diese weiter aus. Optional ist eine Pumpe 3' oder die Ansteuerung der Solepumpe 3 als Saugpumpe vorgesehen, die über eine Steuereinrichtung 13 angesteuert wird. Der Sole-kreislauf durch die Erdsonden 12 wird mit einem Druckwächter 4 überwacht. Bei einer Leckage, die durch Druckabfall ermittelt wird, schaltet die Steuerung die Wärmepumpe vom üblichen Betrieb ab. Sodann wird der Solekreislauf abgesaugt. So tritt keine weitere Sole mehr aus. In einer Version ist die Saugpumpe 3' in einem Bypass. In einem anderen Fall wird die Solepumpe 3 als Absaugpumpe angesteuert. Um mit angesaugtes Grundwasser von Sand zu filtern ist strömungstechnisch vor der Pumpe 3' ein Filter 20 angeordnet.

Die enstprechende ventilumsteuerungen übernimmt die Steuerung 13, so dass die abgesaugte Sole in eine Auffangwanne umgeleitet werden kann, von dem aus eine Rückspeisung möglich ist.

Gemäß der Stammanmeldung kann hier nach dem Absaugen der Sole noch eine Spülung mit Trinkwasser ggfs automatisch vorgenommen werden. Danach kann die Reparatur der Leckage, ggfs im Erdsondenbereich erfolgen.

### Bezugszeichen

- 1: Sole-Wasser-Wärmepumpe
- 2: Hauswasseranschluß / Druckluftanschluß
- 3: Soleumwälzpumpe / Kältemittelumwälzpumpe
- 4: Druckwächter
- 5: Ventil, elektrisch ansteuerbar
- 6: Ventil, elektrisch ansteuerbar
- 7: Auffangwanne
- 8: Strömungswächter
- 9: Wärmetauscher
- 10: Förderbrunnen
- 11: Schluckbrunnen
- 12: Erdsonden
- 13: Steuerung
- 14: Sole-Leitungssystem / Kältemittel-Leitungssystem
- 15: Wasserzähler
- 16: Ausdehnungsgefäß

## Patentansprüche

1. Verfahren zum Betrieb einer Wärmepumpeneinrichtung, oder einer Kälte- oder Kühleinrichtung, mit einem teilweise im Erdreich verlegten oder verlaufenden, oder oberhalb des Erdreiches verlaufenden Sole oder Kältemittel führenden Leitungsbereich, und mit einer damit thermisch korrespondierenden Wärmepumpe,
**dadurch gekennzeichnet,**
**dass** der Druck im Sole- oder Kältemittel-Leitungsbereich über mindestens einen fest installierten Drucksensor während des Betriebes der Einrichtung kontinuierlich gemessen wird, und dass bei Abfall des Druckes unter einen einstellbaren Schwellwert ein Alarm ausgelöst und der Sole- oder Kältemittel Leitungsbereich automatisch mit Luft und/oder Wasser gespült wird.

2. Verfahren nach Anspruch 1,
**dadurch gekennzeichnet,**
**dass** das Spülen durch Einleitung von Trinkwasser in den Sole-Leitungsbereich erfolgt.

3. Verfahren nach Anspruch 1 oder 2,
**dadurch gekennzeichnet,**
**dass** zum Spülen automatisch ein Ventil (A) den Hauswasseranschluß wasserschlüssig zum im Erdreich verlegten Sole-Leitungsbereich öffnet, in der Rücklaufleitung gleichzeitig über ein weiteres Ventil (B) als Bypass zu einem Auffangbehältnis zum Auffangen von Sole geöffnet wird.

4. Verfahren nach Anspruch 1 oder 2,
**dadurch gekennzeichnet,**
**dass** bei der Verwendung von Kältemitteln im besagten im Erdreich verlegten Leitungsbereich zum Spülen automatisch ein Druckluftanschluß über ein Ventil (A) geöffnet wird, und dass in der Rücklaufleitung gleichzeitig über ein weiteres Ventil (B) ein Bypass zu einem Auffangbehältnis zum Auffangen des Kältemittels geöffnet wird.

5. Verfahren nach Anspruch 3,
**dadurch gekennzeichnet,**
**dass** die Menge von zur Spülung eingeleitetem Wasser durch einen Flüssigkeitszähler am Eintritt zum Auffangbehältnis gemessen und bemessen wird.

6. Verfahren nach Anspruch 5,
**dadurch gekennzeichnet,**
**dass** bei Erreichen einer vorher festgelegten Füllmenge von Sole-Wasser-Gemisch das Ventil (A) das Sole-Leitungssystem vom Hauswasseranschluss trennt, und das Ventil (B) Schließt.

7. Verfahren nach einem der Ansprüche 1 bis 6,
**dadurch gekennzeichnet,**
**dass** nach Ortung und Beseitigung der Leckage, das im Auffangbehältnis aufgefangene Sole-Wasser-Gemisch oder das Kältemittel wieder in das Sole- bzw Kältemittelleitungssystem zurückgepumpt wird.

8. Verfahren nach Anspruch 7,
**dadurch gekennzeichnet,**
**dass** zur Rückführung das aufgefangene Sole-Wassergemisch mittels einer Pumpe wieder in das Sole-Leitungssystem gepumpt wird, derart, dass bei Einpumpung die darin enthaltene Spülmenge von Wasser verdrängt und wieder durch das Sole-Wassergemisch ersetzt wird.

9. Verfahren nach einem der vorhergehenden Ansprüche,
**dadurch gekennzeichnet,**
**dass** für die Druckmessung im Sole- oder Kältemittel-Leitungssystem zwei Schwellwerte festgelegt werden, nämlich ein erster kleinerer Druckabfall bis dp1, bei welchem lediglich ein akustischer und/oder optischer Alarm ausgelöst wird, und ein größerer Druckabfall, bei welchem neben dem besagten Alarm sogleich automatisch die genannten Maßnahmen über eine Steuereinrichtung ausgelöst werden.

10. Verfahren nach einem der vorhergehenden Ansprüche,
**dadurch gekennzeichnet,**
**dass** die verwendete Pumpe die vorhandene Sole- bzw Kältmittel-Umwälzpumpe ist.

11. Verfahren nach einem der vorhergehenden Ansprüche,
**dadurch gekennzeichnet,**
**dass** durch Messung der Dichte oder der Leitfähigkeit eventuell nachzufüllendes Frostschutzmittel in der Sole zugeführt/ersetzt wird, bevor diese wieder zurück in das Sole-Leitungssystem gepumpt wird.

12. Verfahren nach Anspruch 1,
**dadurch gekennzeichnet,**
**dass** bei drucklosem Betrieb des Sole- oder Kältmittel-kreislaufes zusätzlich oder anstatt des Druckes im Sole- oder Kältemittel-Leitungsbereich das Niveau in einem Sole-Ausgleichsgefäß über mindestens einen fest installierten Niveau- oder Füllstandssensor während des Betriebes der Einrichtung kontinuierlich gemessen wird, und dass bei Abfall des Füllstandes unter einen einstellbaren Schwellwert ein Alarm ausgelöst und der Sole- oder Kältemittel Leitungsbereich automatisch mit Luft und/oder Wasser gespült wird.

13. Verfahren nach Anspruch 1,
**dadurch gekennzeichnet,**
**dass** ein Sole- oder Kältemittel-Verteiler vorgesehen ist, an dem die Erdkollektoren oder Erdsonden angeschlossen werden, und welcher in einer Wanne angeordnet ist, die mit mindestens einem Niveauschalter ausgestattet austretende Sole oder Kältemittel als Füllhöhe erfasst und einen diesbezüglichen Leckagealarm, und die Maßnahmen der Spülung, oder des Abpumpens einleitet.

14. Verfahren nach Anspruch 1,
**dadurch gekennzeichnet,**
**dass** bei Auftreten bzw Erfassen einer Leckage durch Druckabfall im Sole-Kreislauf, eine Pumpe, vorzugsweise die Sole-Pumpe im Saugbetrieb betrieben wird, derart, dass die Sole im Sole-Kreislauf respektive den Erdsonden oder Erdkollektoren abgesaugt wird.

15. Verfahren nach Anspruch 1,
**dadurch gekennzeichnet,**
**dass** nach der Absaugung mindestens einmal mit Trinkwasser gespült wird.

16. Verfahren nach Anspruch 1,
**dadurch gekennzeichnet,**
**dass** die abgesaugte Sole in einem Auffangbehältnis aufgefangen, und nach Beseitigung der Leckage wiederverwendet wird.

17. Verfahren nach Anspruch 1,
**dadurch gekennzeichnet,**
**dass** der Absaugvorgang automatisch generiert wird.

18. Wärmepumpeneinrichtung, mit einem teilweise im Erdreich verlegten oder verlaufenden, Sole oder Kältemittel führenden Leitungsbereich, und mit einer damit thermisch korrespondierenden Kältemaschine, Kühleinrichtung, oder Wärmepumpe
**dadurch gekennzeichnet,**
**dass** im Sole- oder Kältemittel-Leitungsbereich mindestens ein fest installierter Drucksensor angeordnet ist, über welchen im Betriebes der Einrichtung kontinuierlich der Druck messbar ist, und dass bei Abfall des Druckes unter einen einstellbaren Schwellwert durch eine Steuereinrichtung ein Alarm ausgelösbar ist und der Sole- oder Kältemittel-Leitungsbereich über eine Pumpe, Druckeinrichtung oder Ventilanordnung automatisch mit Wasser oder Druckluft spülbar ist.

19. Wärmepumpeneinrichtung nach Anspruch 14,
**dadurch gekennzeichnet,**
**dass** mindestens ein weiterer redudanter Drucksensor zur Druckmessung in der Sole-oder Kältemittel-Leitung vorgesehen ist.

20. Wärmepumpeneinrichtung nach Anspruch 14 oder 15,
**dadurch gekennzeichnet,**
**dass** ein über die Steuereinrichtung steuerbares Ventil zu einem Aufangbehältnis für ausgespülte Sole oder Kältemittel vorgesehen ist, und ein steuerbares Ventil zum Hauswasseranschluss (Wasserspeiseleitung)oder einem Druckluftanschluß oder einem Drucklufterzeuger vorgesehen ist.

21. Wärmepumpeneinrichtung nach Anspruch 14, 15 oder 16,
**dadurch gekennzeichnet,**
**dass** das Sole- oder Kältmittel-Auffangbehältnis mit einem Leitfähigkeitssensor, oder einem Dichtesensor, oder einer entsprechenden Messeinrichtung versehen ist.

22. Wärmepumpeneinrichtung nach einem der vorhergehenden
Ansprüche 14 bis 17,
**dadurch gekennzeichnet,**
**dass** die Steuerung mit einer Voralarmstufe und einer Hauptalarmstufe ausgestattet ist, derart, dass lediglich ein optischer und/oder akustischer Voralarm ausgelöst wird bei Druckabfall um dp1, und dass ein optischer und/oder akustischer Hauptalarm gemeinsam mit dem besagten automatischen Spülungvorgang ausgelöst wird bei einem Druckabfall um dp2, wobei dp2>dp1 ist.

23. Wärmepumpeneinrichtung nach Anspruch 14,
**dadurch gekennzeichnet,**
**dass** im Sole- oder Kältemittel-Leitungsbereich bei drucklosem Betrieb zusätzlich oder anstatt des Drucksensors mindestens ein fest installierter Niveauschalter in einem Sole-Ausgleichsgefäß angeordnet ist, über welchen im Betriebes der Einrichtung kontinuierlich der Druck im Kreislauf, bzw das Niveau im Ausgleichsgefäß messbar ist, und dass bei Abfall des Druckes bzw des besagten Niveaus unter einen einstellbaren Schwellwert durch eine Steuereinrichtung ein Alarm ausgelösbar ist und der Sole- oder Kältemittel-Leitungsbereich über eine Pumpe, Druckeinrichtung oder Ventilanordnung automatisch mit Wasser oder Druckluft spülbar ist

24. Wärmepumpeneinrichtung nach Anspruch 14,
**dadurch gekennzeichnet,**
**dass** bei den Erdsonden oder den Erdkollektoren ein Rohr-in-Rohr-System eingesetzt ist, bei welchem das Sole- oder Kältemittel führende Rohr noch durch ein weiteres Mantelrohr umgeben ist.

25. Wärmepumpeneinrichtung nach Anspruch 14,
**dadurch gekennzeichnet,**
**dass** bei der Verwendung von Erdkollektoren diese im Erdreich in einer Wanne angelegt sind, derart dass austretende Sole- oder austretendes Kältemittel in derselben auffangbar ist.

26. Wärmepumpeneinrichtung nach Anspruch 14,
**dadurch gekennzeichnet,**
**dass** bei Auftreten bzw Erfassen einer Leckage durch Druckabfall an Drucksensoren im Sole-Kreislauf über eine Steuereinrichtung eine Pumpe, vorzugsweise die Sole-Pumpe in Saugbetrieb schaltbar ist, derart, dass die Sole im Sole-Kreislauf respektive den Erdsonden oder Erdkollektoren absaugbar ist.

27. Wärmepumpeneinrichtung nach Anspruch 14,
**dadurch gekennzeichnet,**
**dass** strömungstechnisch vor der Pumpe ein zusätzlicher Schmutzfilter angeordnet ist.
